**Europäisches Patentamt**

(19) **European Patent Office**

**Office européen des brevets**

(11) Veröffentlichungsnummer: **0 092 599**
**B1**

(12) **EUROPÄISCHE PATENTSCHRIFT**

(45) Veröffentlichungstag der Patentschrift:
**13.07.88**

(51) Int. Cl.⁴: **A 01 F 12/28**

(21) Anmeldenummer: **82103615.9**

(22) Anmeldetag: **28.04.82**

(54) Vorrichtung zum Verändern des Abstandes zwischen Dreschtrommel und Dreschkorb eines Mähdreschers.

(43) Veröffentlichungstag der Anmeldung:
**02.11.83 Patentblatt 83/44**

(45) Bekanntmachung des Hinweises auf die Patenterteilung:
**13.07.88 Patentblatt 88/28**

(84) Benannte Vertragsstaaten:
**BE DE FR GB IT SE**

(56) Entgegenhaltungen:
**CH - A - 223 243**
**DE - A - 2 655 119**
**DE - B - 1 130 641**
**DE - B - 2 161 745**
**DE - C - 69 241**
**DE - C - 84 358**
**DE - C - 494 275**
**DE - C - 600 735**

(73) Patentinhaber: **DEERE & COMPANY, 1 John Deere Road, Moline Illinois 61265 (US)**

(72) Erfinder: **Glaser, Fritz, Dr., Brandenburgstrasse 3, D-6660 Zweibrücken (DE)**
Erfinder: **Laberheim, René, No. 38 Eschviller, F-57720 Volmunster (FR)**

(74) Vertreter: **Feldmann, Bernhard et al, DEERE & COMPANY European Office, Patent Department Steubenstrasse 36-42 Postfach 503, D-6800 Mannheim 1 (DE)**

**Beschreibung**

Die Erfindung bezieht sich auf eine Vorrichtung zum Verändern des Abstandes zwischen einer Dreschtrommel eines Mähdreschers und mindestens einem auf einem Dreschkorb schwenkbar gelagerten Dreschkorbsegment mittels eines an einem Ende des Dreschkorbes angeschlossenen Stellorganes, das gegen die Wirkung einer von einer Feder ausgeübten Stellkraft verstellbar ist, wobei der Dreschkorb gemeinsam mit einem oder mehreren Dreschkorbsegmenten über eine weitere Stellvorrichtung verschwenkbar ist und das oder die Dreschkorbsegmente auf einem Rahmen des Dreschkorbes schwenkbar gelagert sind.

Es ist bereits eine stationäre Dreschmaschine bekannt (US-A-2 053 148), deren unterer Dreschkorb aus zwei Dreschkorbsegmenten besteht, die an ihren gegenüberliegenden Enden mit je einer Stellvorrichtung verbunden sind, so dass die beiden Dreschkorbsegmente mit Bezug auf den Dreschkorb in Radialrichtung nur über die Stellvorrichtung gemeinsam verstellt werden können, um somit die Spaltbreite zwischen Dreschtrommel und Dreschkorb zu verändern. Darüber hinaus ist mit dieser Anordnung keine selbsttätige Anpassung der einzelnen Dreschkorbsegmente an die Dreschtrommel möglich, insbesondere dann, wenn beim Drescheinsatz der Erntegutdurchsatz plötzlich verändert wird.

Ferner ist es bekannt, im Bereich des Endes eines einteiligen Dreschkorbes eine Strebe anzulenken (DE-B-2 161 745), deren anderes Ende verschiebbar geführt ist und an der eine Feder angreift, so dass auftretende Belastungsschwankungen am Dreschkorb ausgeglichen werden können.

Es ist bereits ein Mähdrescher der eingangs aufgeführten Art bekannt (DE-C-84 358), der einen Dreschkorb aufweist, der aus zwei über ein Gelenk miteinander verbundenen Dreschkorbsegmenten besteht, die so ausgebildet sind, dass jedes durch einen Fremdkörper zurückgedrängte Glied den ganzen Dreschkorb von der Trommel abdrücken soll. Die Verstellung der einzelnen relativ grossen, segmentartigen Dreschkorbteile weist jedoch den grossen Nachteil auf, dass bei Auftreten von Hindernissen nicht eine sofortige Verstellung der einzelnen Dreschkorbsegmente erfolgt, da diese infolge ihrer grossen Masse sehr schwerfällig arbeiten und daher nicht leicht zu verstellen sind. Eine Verstellung wird durch die relativ aufwendige und komplizierte Lagerung der Dreschkorbsegmente erschwert. Aus diesem Grunde ist die relativ teure und aufwendige mehrgliedrige Ausbildung eines Dreschkorbes für die Praxis nicht von Bedeutung.

Demgegenüber liegt der Erfindung die Aufgabe zugrunde, zumindest ein Dreschkorbsegment derart auszubilden und anzuordnen, dass in Abhängigkeit des Erntegutdurchsatzes immer eine optimale Spaltbreite zwischen Dreschkorb und Dreschtrommel gebildet werden kann. Diese Aufgabe ist dadurch gelöst worden, dass das stromabwärts liegende Dreschkorbsegment ein Bogenmass aufweist, das kleiner ist als das Bogenmass des stromaufwärts liegenden Dreschkorbsegmentes, und dabei eine Fläche zwischen 10% und 40% der Gesamtfläche des Dreschkorbes umfasst, wobei sich das Dreschkorbsegment stromabwärts liegende über die Feder auf dem Rahmen abstützt, der gemeinsam mit dem stromabwärts liegende Dreschkorbsegment über die weitere Stellvorrichtung verschwenkbar ist. Durch die vorteilhafte Ausbildung des Dreschkorbes wird jedoch eine leichte und sehr schnelle Anpassung des Auslaufendes des Dreschkorbes erreicht, da nicht mehr der gesamte Rahmen des Dreschkorbes, sondern lediglich das Dreschkorbsegment sich gegenüber dem Rahmen verstellt. Die Spaltbreite des gesamten Dreschkorbes lässt sich darüber hinaus ohne weiteres über eine Stellvorrichtung zusätzlich verstellen, wobei das verstellbar gelagerte Dreschkorbsegment mit verstellt wird. Auf diese Weise kann eine einwandfreie Anpassung des Dreschkorbes an unterschiedliche Arbeitsbedingungen vorgenommen werden.

Hierzu ist es vorteilhaft, dass das Stellorgan des stromabwärts liegenden Dreschkorbsegmentes einenends an das Dreschkorbsegment gelenkig angeschlossen und anderenends in der am Dreschkorb bzw. an seinem Rahmen angeordneten Halterung gegen die Wirkung der Feder verschiebbar gelagert ist, die auf dem Stellorgan zwischen der Halterung und einer auf dem Stellorgan vorgesehenen Stellmutter angeordnet ist. Hierdurch erhält man mit relativ einfachen Mitteln eine einfache Verstellmöglichkeit für das Dreschkorbsegment im Bereich des Auslaufendes des Dreschkorbes. Um die Stellkraft des Stellorganes zu verändern, ist es vorteilhaft, dass das Stellorgan über eine zweite Stellmutter gegen Herausgleiten aus der Halterung gesichert ist und ein zwischen der Halterung und der Stellmutter vorgesehenes Dämpfungsglied aufweist und dass zur Dämpfung des Dreschkorbsegmentes ein Druckspeicher vorgesehen ist, der zwischen dem Dreschkorbsegment und der Halterung wirkt. Durch die Verwendung der Dämpfungsglieder können Beschädigungen am Dreschkorb weitgehend vermieden werden.

In weiterer Ausgestaltung der Erfindung ist es vorteilhaft, dass an den beiden seitlichen Stirnkanten des stromabwärts liegenden Dreschkorbsegmentes je ein verschwenkbarer Rahmenteil angeordnet ist, der mit dem Rahmen des stromaufwärts liegenden Dreschkorbsegmentes einen Kreisbogenabschnitt bildet. Ferner ist es vorteilhaft, dass die seitliche Stirnkante des stromabwärts liegenden Dreschkorbsegmentes mit dem Rahmenteil einen nach unten offenen, im Querschnitt U-förmigen Aufnahmeteil bildet, der zur Aufnahme eines Tragarmes dient, der an dem stromaufwärts liegenden Dreschkorbsegment angeordnet ist. Ausserdem ist es vorteilhaft, dass der Tragarm starr mit dem Rahmen des Dreschkorbsegmentes verbunden ist und die Feder sich einenends gegen den Tragarm und anderenends gegen das abgabeseitige Ende des stromabwärts liegenden Dreschkorbsegmentes abstützt.

Anhand der Zeichnung wird ein Ausführungsbeispiel einer Vorrichtung zum Verändern des Abstandes zwischen Dreschtrommel und Dreschkorb eines Mähdreschers nach der Erfindung erläutert. Es zeigt:

Fig. 1 eine Seitenansicht einer Dreschtrommel und eines Dreschkorbes für einen Mähdrescher mit der zugehörigen Verstellvorrichtung;

Fig. 2 eine perspektivische Darstellung des rechten Auslaufendes eines Dreschkorbsegmentes mit der zugehörigen Stellvorrichtung.

In der Zeichnung ist mit 10 eine Dreschtrommel bezeichnet, die auf einer Achse 12 drehbar gelagert ist, die in Seitenwänden eines in der Zeichnung nicht dargestellten Mähdreschers, lagert. Die Dreschtrommel 10 besteht aus mehreren parallel zueinander verlaufenden auf der Achse 12 angeordneten Dreschtrommelscheiben 14, die über zahlreiche Dreschleisten 16 miteinander verbunden sind. Die Dreschtrommel 10 wird über eine in der Zeichnung nicht dargestellte Antriebsvorrichtung gemäss Pfeil 17 im entgegengesetzten Uhrzeigerdrehsinn angetrieben.

Unterhalb der Dreschtrommel 10 befindet sich ein Dreschkorb 18, der im Bereich seiner Aufnahmeseite 20 auf einer Achse 22 schwenkbar gelagert ist. Die Achse 22 kann in einer in der Zeichnung nicht dargestellten Halterung bzw. in den Seitenwänden des Mähdreschers aufgenommen werden. Der Dreschkorb 18 umgibt in etwa 90% des unteren Teiles der Dreschtrommel, die als Dreschtrommel für einen Querflussmähdrescher mit Hordenschüttler ausgebildet ist. Sollte die Dreschtrommel 10 für einen Axialflussmähdrescher eingesetzt werden, so muss sich an den Dreschkorb ein zylindrischer Gehäusemantel anschliessen, so dass Dreschkorb und Gehäusemantel die Dreschtrommel vollständig umgeben.

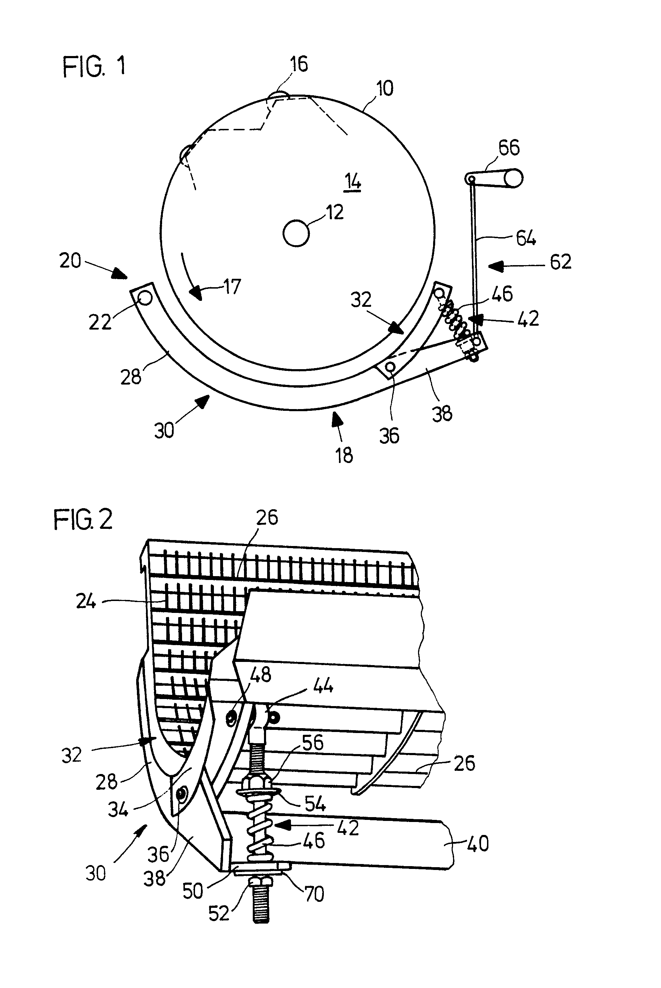

Wie aus Fig. 2 hervorgeht, besteht der Dreschkorb aus zahlreichen mit Abstand zueinander angeordneten in Umlaufrichtung halbkreisförmig gebogenen Korbdrähten bzw. Rippen 24, die über zahlreiche parallel und querverlaufende Stege 26 verbunden sind. Die einzelnen Stege 26 lagern endseitig in je einem Rahmen 28, der Teil des Dreschkorbes 18 ist.

Wie insbesondere aus Fig. 1 hervorgeht, besteht der Dreschkorb 18 aus zwei unterschiedlich grossen Dreschkorbsegmenten 30 und 32. Das stromaufwärtsliegende Dreschkorbsegment 30 ist wesentlich grösser als das stromabwärtsliegende Dreschkorbsegment 32. Das stromaufwärtsliegende Dreschkorbsegment 30 kann eine Bogenlänge aufweisen, die maximal dreimal so gross ist wie die Bogenlänge des stromabwärtsliegenden Dreschkorbsegmentes 32. Das Dreschkorbsegment 32 liegt mit seiner inneren kreisbogenförmigen Oberfläche auf dem gleichen Radius wie das stromaufwärtsliegende Dreschkorbsegment 30. Das Dreschkorbsegment 32 ist ebenso wie der bereits beschriebene Dreschkorb 18 aus zahlreichen parallel zueinander verlaufenden nicht dargestellten Rippen gebildet, die ebenfalls über die querverlaufenden Stege 26 miteinander verbunden werden. Das Dreschkorbsegment 32 wird beiderseits durch einen Rahmen 34 begrenzt, wobei in Fig. 2 lediglich der mit Bezug auf die Bewegungsrichtung des Erntegutes rechte Rahmenteil dargestellt ist. Der Rahmen 34 besteht aus einem nach unten offenen U-förmigen Bogenstück, das mittels eines Bolzens 36 an den jeweiligen Rahmen 28 des stromaufwärtsliegenden Dreschkorbsegmentes 30 schwenkbar angeschlossen ist. Im Bereich des abgabeseitigen Endes des Dreschkorbsegmentes 30 ist das Dreschkorbsegment 30 mit einem als Verlängerung ausgebildeten Tragarm 38 ausgerüstet, der Bestandteil des entsprechenden Rahmens 28 ist. Die beiden gegenüberliegenden Tragarme 38 sind, wie aus Fig. 2 hervorgeht, über ein querverlaufendes Rohr 40 miteinander verbunden. An das äussere Ende eines jeden Tragarmes 38 ist eine Stellvorrichtung 42 angeschlossen, die aus einer Augenschraube 44 mit einer auf diese aufgeschobenen Feder 46 besteht. Die Augenschraube 44 ist an ihrem oberen Ende an einen mit dem Rahmen 34 verbundenen Gelenkbolzen 48 schwenkbar angeschlossen und mit ihrem unteren Ende in einer am Tragarm 38 vorgesehenen Halterung 50 verschiebbar aufgenommen und mittels einer Mutter 52 gegen Herausgleiten gesichert. Die auf der Augenschraube 44 angeordnete Feder 46 stützt sich mit ihrem unteren Ende gegen die Halterung 50 und mit ihrem oberen Ende gegen eine Anschlagscheibe 54 ab, die mittels einer weiteren auf der Augenschraube aufgeschraubten Mutter 56 verstellt werden kann, um die Vorspannkraft der Feder 46 entsprechend zu verändern.

Wie aus Fig. 1 hervorgeht, greift an das äussere Ende des Tragarmes 38 eine weitere Stellvorrichtung 62 an, die aus einem Gestänge 64 besteht, das einenends an den Tragarm 38 gelenkig angeschlossen ist, anderenends an einen Hebelarm 66, der über einen in der Zeichnung nicht dargestellten Stellmotor angetrieben werden kann. Es ist jedoch auch möglich, den Hebelarm 66 über einen Handhebel entsprechend zu verschwenken.

Um den Mähdrescher für den Arbeitseinsatz bereitzustellen, wird über die Stellvorrichtung 62 die entsprechende Spaltbreite zwischen der Dreschtrommel 10 und dem Dreschkorb 18 eingestellt. Hierzu wird der Hebelarm 66 verschwenkt und somit der Dreschkorb 18 um seine Achse 22. Die Spaltbreite wird so gewählt, dass sie am Auslaufende des Dreschkorbsegmentes 32 kleiner ist als an der Einlaufseite des Dreschkorbsegmentes 30. Tritt nun während des Arbeitseinsatzes infolge zunehmender Bestandsdichte des Erntegutes ein grösserer Erntegutdurchsatz auf, so verschwenkt in Abhängigkeit der anfallenden Gutsmenge das Dreschkorbsegment 32 vom Aussenumfang der Dreschtrommel 10 weg und drückt dabei die Feder 46 zusammen. Sobald der normale Erntegutdurchsatz sich wieder einstellt, federt das Dreschkorbsegment 32 wieder in seine ursprüngliche Lage zurück. Auch bei plötzlich auftretenden Hindernissen, beispielsweise beim Mitführen von Steinen in der Erntegutmatte, kann das Dreschkorbsegment sehr schnell ausweichen und in seine ursprüngliche Lage zurückverschwenkt werden. Um das Zurückschwenken des Dreschkorbsegmentes 32 abzudämpfen, kann zwischen der Unterseite der Halterung 50 und der Mutter 52 ein Dämpfungsglied 70 beispielsweise eine Feder bzw. eine Gummischeibe vorgesehen werden. Auf diese Weise kann der Anschlag der Mutter 52 gegen die Halterung 50 so abgedämpft werden, dass eine Beschädigung der Stellvorrichtung 42 vermieden werden kann. Anstelle der in Fig. 1 und 2 dargestellten Stellvorrichtung 42 kann lediglich ein Dämpfungsglied beispielsweise ein Gasdruckspeicher vorgesehen werden, der ein Ausweichen des Dreschkorbsegmentes 32 gestattet. Soll die Spaltbreite insgesamt verändert werden, so braucht lediglich der Hebelarm 66 verschwenkt zu werden, so dass die beiden Dreschkorbsegmente 30 und 32 gemeinsam nach unten oder oben verstellt werden.

**Patentansprüche**

1. Vorrichtung zum Verändern des Abstandes zwischen einer Dreschtrommel (10) eines Mähdreschers und mindestens einem auf einem Dreschkorb (18) schwenkbar gelagerten Dreschkorbsegment (32) mittels eines an einem Ende des Dreschkorbes (18) angeschlossenen Stellorganes (42), das gegen die Wirkung einer von einer Feder (46) ausgeübten Stellkraft verstellbar ist, wobei der Dreschkorb (18) gemeinsam mit einem oder mehreren Dreschkorbsegmenten (30, 32) über eine weitere Stellvorrichtung (62) verschwenkbar ist und das oder die Dreschkorbsegmente auf einem Rahmen (28) des Dreschkorbes (18) schwenkbar gelagert sind, dadurch gekennzeichnet, dass das stromabwärts liegende Dreschkorbsegment (32) ein Bogenmass aufweist, das kleiner ist als das Bogenmass des stromaufwärts liegenden Dreschkorbsegmentes (30), und dabei eine Fläche zwischen 10% und 40% der Gesamtfläche des Dreschkorbes (18) umfasst, wobei sich das stromabwärts liegende Dreschkorbsegment (32) über die Feder auf dem Rahmen (28) abstützt, der gemeinsam mit dem stromaufwärts liegende Dreschkorbsegment (30) über die weitere Stellvorrichtung (62) verschwenkbar ist.

2. Vorrichtung nach Anspruch 1, dadurch gekennzeichnet, dass das Stellorgan (42) des stromabwärts liegenden Dreschkorbsegmentes (32) einenends an das Dreschkorbsegment (32) gelenkig angeschlossen und anderenends in der am Dreschkorb (18) bzw. an seinem Rahmen (28) angeordneten Halterung (50) gegen die Wirkung der Feder (46) verschiebbar gelagert ist, die auf dem Stellorgan (Augenschraube 44) zwischen der Halterung (50) und einer auf dem Stellorgan vorgesehenen Stellmutter (56) angeordnet ist.

3. Vorrichtung nach einem oder mehreren der vorherigen Ansprüche, dadurch gekennzeichnet, dass das Stellorgan (42, Augenschraube 44) über eine zweite Stellmutter (52) gegen Herausgleiten aus der Halterung (50) gesichert ist und ein zwischen der Halterung (50) und der Stellmutter (52) vorgesehenes Dämpfungsglied (70) aufweist.

4. Vorrichtung nach einem oder mehreren der vorherigen Ansprüche, dadurch gekennzeichnet, dass zur Dämpfung des Dreschkorbsegmentes (32) ein Druckspeicher vorgesehen ist, der zwischen dem Dreschkorbsegment (32) und der Halterung (50) wirkt.

5. Vorrichtung nach einem oder mehreren der vorherigen Ansprüche, dadurch gekennzeichnet, dass an den beiden seitlichen Stirnkanten des stromabwärts liegenden Dreschkorbsegmentes (32) je ein verschwenkbarer Rahmenteil (34) angeordnet ist, der mit dem Rahmen (28) des stromaufwärts liegenden Dreschkorbsegmentes (30) einen Kreisbogenabschnitt bildet.

6. Vorrichtung nach einem oder mehreren der vorherigen Ansprüche, dadurch gekennzeichnet, dass die seitliche Stirnkante des stromabwärts liegenden Dreschkorbsegmentes (32) mit dem Rahmenteil einen nach unten offenen, im Querschnitt U-förmigen Aufnahmeteil bildet, der zur Aufnahme eines Tragarmes (38) dient, der an dem stromaufwärts liegenden Dreschkorbsegment (30) angeordnet ist.

7. Vorrichtung nach einem oder mehreren der vorherigen Ansprüche, dadurch gekennzeichnet, dass der Tragarm (38) starr mit dem Rahmen des Dreschkorbsegmentes (30) verbunden ist und die Feder (46) sich einenends gegen den Tragarm und anderenends gegen das abgabeseitige Ende des stromabwärts liegenden Dreschkorbsegmentes (32) abstützt.

**Claims**

1. Device for varying the distance between a threshing drum (10) of a combine harvester and at least one threshing basket segment (32) pivotally mounted on a threshing basket (18) by means of an adjusting element (42) connected to one end of the threshing basket (18), which adjusting element is movable against the action of a positioning force exerted by a spring (46), wherein the threshing basket (18) is pivotable together with one or more threshing basket segments (30, 32) by means of a further adjusting device (62) and the threshing basket segment or segments are pivotally mounted on a frame (28) of the threshing basket (18), characterised in that the downstream basket segment (32) has an arcuate extent which is smaller than the arcuate extent of the upstream threshing basket segment (30), covering a surface between 10% and 40% of the total threshing basket surface, while the downstream-located threshing basket segment (32) is supported on the frame (28) by the spring, which frame is pivotable together with the upstream-located threshing basket segment (30) by means of the further adjusting device (62).

2. A device according to claim 1, characterised in that the adjusting device (42) of the downstream-located threshing basket segment (32) is at one end hingedly connected to the basket segment (32) and, at the other end, is mounted slidably against the action of the spring (46) in a retainer (50) arranged on the threshing basket (18) or its frame (28) which spring is arranged on the adjusting element (eyebolt 44) between the retainer (50) and an adjusting nut (56) provided on the adjusting element.

3. A device according to one or more of the preceding claims, characterised in that the adjusting element (42, eyebolt 44) is secured by means of a second adjusting nut (52) against slipping out of the retainer (50) and comprises a damping element (70) between the retainer (50) and the adjusting nut (52).

4. A device according to one or more of the preceding claims, characterised in that for damping of the threshing basket segment (32) there is provided a pressure reservoir which acts between the threshing basket segment (32) and the retainer (50).

5. A device according to one or more of the preceding claims, characterised in that on each of the two lateral front edges of the downstream located threshing basket segment (32) a pivotable frame part (34) is arranged, which forms a segment of a circular arc with the frame (28) of the upstream-located threshing basket segments (30).

6. A device according to one or more of the preceding claims, characterised in that the lateral front edge of the downstream-located threshing basket segment (32) forms, with the frame part, a receiving part of U-shaped cross-section opening in downward direction, which serves to accommodate a supporting arm (38), which is arranged on the upstream-located threshing basket segment (32).

7. A device according to one or more of the preceding claims, characterised in that the supporting arm (38) is rigidly connected to the frame of the threshing basket segment (30) and in that the spring (46) bears at one end against the supporting arm and at the other end against the discharge end of the downstream-located threshing basket segment (32).

**Revendications**

1. Dispositif pour faire varier l'écartement entre un batteur (10) d'une moissonneuse-batteuse et au moins un segment de contre-batteur (32) monté de façon à pouvoir pivoter sur un contre-batteur (18) au moyen d'un organe de réglage (42) raccordé à une extrémité du contre-batteur (18) qui peut être déplacé en antagonisme avec la force de réglage exercée par un ressort (46), le contre-batteur (18) pouvant pivoter conjointement à un ou plusieurs segments de contre-batteur (30, 32) sous l'effet d'un autre dispositif de réglage (62) et le ou les segments de contre-batteur étant placés de façon à pouvoir pivoter sur un bâti (28) du contre-batteur (18), caractérisé en ce que le segment de contre-batteur (32) placé en aval présente une longueur d'arc inférieure à la longueur d'arc de segment de contre-batteur (30) placé en amont, et embrasse en même temps une surface comprise entre 10% et 40% de la surface totale du contre-batteur (18), le segment de contre-batteur (32) situé en aval s'appuyant, par l'intermédiaire du ressort, sur le bâti (28) qui peut pivoter conjointement au segment de contre-batteur (30) situé en amont, sous l'effet de l'autre dispositif de réglage (62).

2. Dispositif selon la revendication 1, catactérisé en ce que l'organe de réglage (42) du segment de contre-batteur (32) situé en aval est articulé par une extrémité au segment de contre-batteur (32) et est placé, par son autre extrémité, dans le support (50) placé sur le contre-batteur (18) ou son bâti (28) de façon à pouvoir se déplacer contre l'action du ressort (46) qui est placé sur l'organe de réglage (vis à œilleton 44) entre le support (50) et un écrou de réglage (56) prévu sur l'organe de réglage.

3. Dispositif selon une ou plusieurs des revendications précédentes caractérisé en ce que l'organe de réglage (42, vis à œilleton 44) est fixé au moyen d'un second écrou de réglage (52) d'une manière l'empêchant de s'échapper en glissant du support (50) et comporte un élément d'amortissement (70) prévu entre le support (50) et l'écrou de réglage (52).

4. Dispositif selon une ou plusieurs des revendications précédentes, caractérisé en ce que, pour l'amortissement du segment de contre-batteur (32), il est prévu un accumulateur de pression qui agit entre le segment de contre-batteur (32) et le support (50).

5. Dispositif selon une ou plusieurs des revendications précédentes, caractérisé en ce qu'il est prévu, sur chacun des deux bords latéraux du segment aval (32) du contre-batteur, un élément de bâti (34) pivotant qui forme, avec le bâti (28) du segment amont (30) du contre-batteur, un tronçon d'arc de cercle.

6. Dispositif selon une ou plusieurs des revendications précédentes, caractérisé en ce que le bord latéral du segment de contre-batteur (32) situé en aval forme, avec l'élément de bâti, une partie de réception à section en U ouverte vers le bas, qui sert à la réception d'un bras de support (38) qui est disposé sur le segment amont (30) du contre-batteur.

7. Dispositif selon une ou plusieurs des revendications précédentes, caractérisé en ce que le bras de support (38) est relié rigidement au bâti du segment de contre-batteur (30), et en ce que le ressort (46) prend appui par une extrémité contre le bras de support et, par l'autre extrémité, contre l'extrémité de sortie du segment aval (32) du contre-batteur.

0 092 599

FIG. 1

16
10
66
14
12
64
20
62
22
17
32
46
28
42
30
38
18
36

FIG. 2

26
24
48
44
32
56
28
26
34
54
36
42
30
46
40
38
50
70
52

7